Europäisches Patentamt

European Patent Office

Office européen des brevets

(19)

(11) **EP 1 564 901 A1**

(12) **EUROPEAN PATENT APPLICATION**

(43) Date of publication:
**17.08.2005 Bulletin 2005/33**

(51) Int Cl.[7]: **H04B 1/707**

(21) Application number: **04425097.5**

(22) Date of filing: **16.02.2004**

| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (71) Applicant: **Siemens Mobile Communications S.p.A.**<br>**20126 Milano (IT)**<br><br>(72) Inventor: **Montanari, Ettore**<br>**43036 Fidenza (IT)** |
| --- | --- |

(54) **A method of joint detection in CDMA-based mobile communication systems**

(57)     A method of joint detection in CDMA-based mobile communication systems employs a FFT (Fast Fourier Transform) technique exploiting a sliding window method to reduce computational complexity. To eliminate the degradation affecting the initial and final chips of the estimated vector of the transmitted signal, a predetermined number of null elements is added at the beginning and the end of the received signal vector, before its decomposition in subvectors for application of the sliding window method. (Fig. 10)

RECEIVE ON DIFFERENT ANTENNAS A COMBINED SIGNAL/VECTOR *e* RELATED TO A TIME SLOT AND CONTAINING THE SPREAD USER SYMBOLS AFFECTED BY CHANNEL INTERFERENCE AND NOISE. — 101

ESTIMATE THE CHANNEL IMPULSE RESPONSE FOR EACH USER AND EACH ANTENNA . — 102

CONSTRUCT CHANNEL RESPONSE MATRIX *A* BASED ON THE ESTIMATED CHANNELS AND THE USER SPREADING CODES. — 103

EXTRACT WINDOWED CHANNEL RESPONSE SUBMATRIX $A_s$ USED TO PERFORM THE SLIDING WINDOW DETECTION. — 104

ADD SOME BLOCK COLUMNS TO $A_s$ TO OBTAIN A BLOCK CIRCULANT MATRIX $A_{sc}$. — 105

ADD **Q** ZEROES AT THE BEGINNING AND THE END OF VECTOR *e*. — 106

DIVIDE VECTOR *e* IN SUBVECTORS $e_{sc}$ AND SOLVE WITH FOURIER METHOD THE SMALL MINIMUM SQUARE ERROR PROBLEMS
$A_{sc} \cdot d_{sc} = e_{sc}.$ — 107

EXTRACT THE CENTRAL PART OF SOLUTIONS $d_{sc}$ TO OBTAIN THE DIFFERENT PARTS OF THE ZERO FORCING ESTIMATION OF THE TRANSMITTED SYMBOLS. — 108

FIG. 10

**Description**

Field of the invention

The present invention refers to mobile communication systems using Code Division Multiple Access (CDMA), and more particularly it concerns a method of joint (or multiuser) detection in one such system. The invention also concerns a detector implementing the method and a communication system including the detector.

Background of the Invention

As known, CDMA is a multiplexing technique by which several users can simultaneously access a transmission channel by modulating pre-assigned complex signatures, known as spreading codes, by their respective data. In case of a CDMA-based mobile communication system, such as a third generation mobile communication systems, several users (co-channel users) can thus share a same frequency and a same time slot. In uplink direction, at each time slot, the bursts of co-channel users simultaneously arrive at a receiver and the problem arises of detecting, the signals of said users.

A technique commonly used for such detection is the joint detection technique, in which the signals from all co-channel users are simultaneously detected. Taking into account that antenna diversity is generally used at the receiver, this means that, at each time slot, the receiver has to process a sequence $e$ resulting from the superposition of the sequences of spread symbols arriving at all antenna elements from all co-channel users.

In a mathematical representation, $e$ is a vector given by

$$e = Ad + n \tag{1}$$

where $d$ is the vector of the transmitted symbols of all co-channel users, $A$ is the matrix of the impulse responses of the channel for all co-channel users and all antennas, and $n$ is a noise vector. Neglecting for sake of simplicity the noise effects (that can be eliminated through a whitening filter acting on both the data and the channel responses), joint detection corresponds to finding vector $d$ that minimises quantity

$$\|A \cdot d - e\| \tag{2}$$

where '$\|\|$' denotes the usual complex vector norm operation.

Vector $d$ can be determined by using the so called Zero Forcing Linear Equaliser (ZFLE) method, which is represented by either of the following equations:

$$\begin{cases} \mathbf{d} = (\mathbf{A}^{\mathbf{H}} \cdot \mathbf{A})^{-1} \cdot \mathbf{A}^{\mathbf{H}} \cdot \mathbf{e} \\ \mathbf{d} = \mathbf{T} \cdot \mathbf{Q}^{\mathbf{H}} \cdot \mathbf{e} \end{cases} \tag{3}$$

In the equations above:

- $A^H$ is the conjugate-transpose (Hermitian) of matrix $A$
- $Q$ and $T$ are the matrix factors related to the so-called OR decomposition of matrix $A$, where:

  - $Q$ is a square orthonormal matrix ($Q \cdot Q^H = Q^H \cdot Q$ = Identity matrix)
  - $T$ is a rectangular matrix in which the non-zero elements triangular part is the inverse of the OR decomposition triangular part of $R$ and is placed in the left side of the matrix.

A more complete discussion of the theoretical principles of the joint detection can be found in "Zero Forcing and Minimum Mean-Square-Error Equalization for Multiuser Detection in Code-Division Multiple-Access Channels", by A. Klein, G.K.Kaleh, P.W.Baier, IEEE Transactions On Vehicular Technology, Vol. 45, No. 2, pp. 276-287, May 1996.

A common technique for implementing the above-mentioned ZFLE is based on the Fast Fourier Transform (FFT), which exploits the fact that signal processing in the frequency domain is often simpler than in the time domain. WO-A 02/063779, WO-A 02/082268 and WO-A 02/089346 disclose CDMA receivers using the FFT.

In a class of detectors applying the FFT, the computational complexity is reduced by splitting the general minimum square error problem of equation (2) into several smaller minimum square error problems: this is obtained by decomposing matrix $A$ and vectors $e$ and $d$ in several overlapping submatrices and subvectors (sliding window method). The detection results in several overlapping subvectors of vector $d$, which are then to be combined again. The FFT based sliding window method requires that the submatrices are made block-circular, what can be obtained by the addition of further block columns, suitably arranged in the submatrices, and by a zero padding of vector $e$.

The sliding window FFT technique is applicable both to time division duplexing (TDD) and frequency division duplexing (FDD) CDMA mobile systems, as disclosed in "Comparative Study of Joint-Detection Techniques for TD-CDMA Based Mobile Radio Systems", by M.Vollmer, M Haardt, J.Götze, IEEE Journal on Selected Areas in Communications, Vol. 19, No. 8, pp. 1461-1475, August 2001; "FFT Speed Multiuser Detection for High Rate Data Mode in UTRA-FDD", by R.Machauer, M.Iorescu and F.Jondral, IEEE 54th Vehicular Technology Conference, Fall 2001, pp. 502-505, October 2001; and "FFT-Speed and Windowed Multiuser Detector for UTRA-FDD High Rate Data Mode", by R.Machauer and F.Jondral, IEEE 7th International Symposium on Spread-Spectrum Tech. & Appl. Prague, Sept. 2-5, 2002.

The addition of a block to each submatrix is a perturbation that affects the initial and final portions of each detected subvector. This is obviated by so arranging the submatrices and subvectors that the information carried by said initial and final portions is contained also in the central portion of an adjacent subvectors, so that said initial and final portions can be discarded. However, this cannot be effected for the initial portion of the first subvector and the final portion of the last subvector, because the information carried by such portions has no replica in an adjacent subvector: the presence of such "noisy" portions entails a certain degradation of the system performance.

WO-A 02/082268 discloses a method of compensating, at the receiver of CDMA wireless communication system, the error due to the approximation of the channel cross-correlation matrix by a circulant matrix. Yet, the prior art method is not based on the sliding window technique, so that the problem of the perturbation of the first and last chips due to the addition of block columns can be neglected. Moreover, the prior art method operates on the complete matrix, what entails a greater computational burden than operating on a plurality of smaller matrices. A further addition to the computational complexity is given by the choice of operating on the channel cross-correlation matrix, which is to be computed from the channel response matrix obtained by the channel estimation, and by the consequent need to compute the output of a matched filter.

The aim of the invention is to provide a joint detection method which is based on the FFT with sliding window technique applied directly to the channel response matrix and which allows solving the problem arising when the matrices to be operated on are made circulant by the addition of a matrix block.

Summary of the Invention

According to the invention, this is obtained in that, before the decomposition of vector e of the received signal into a plurality of overlapping subvectors, a number of null elements is added at the vector beginning and at the vector end, whereby, at the detection, the first and the last information symbols are located in a central portion of a respective first and last transmitted signal subvector $d_s$, and the portions of the detected transmission signal vector corresponding to said null elements are discarded.

The invention provides also a detector for a base station of a CDMA mobile communication system, and a CDMA mobile communication system including base stations equipped with said detector.

Brief description of the drawings

A preferred embodiment of the invention, given by way of non-limiting example, will now be disclosed with reference to the accompanying drawings, in which:

- Fig. 1 is a schematic block diagram of the uplink channel of a CDMA mobile communication system;
- Fig. 2 is a representation of the organisation of a burst in the system of Fig. 1;
- Figs. 3 to 8 are graphical representations explaining the FFT-based sliding window method;
- Fig. 9 is a graphical representation of the relation between the received and detected signal subvectors when the invention is applied;
- Fig. 10 is a flow chart of the method of the invention; and
- Figs. 11 and 12 are comparative graphs of the performance of the invention and of conventional method.

Description of the preferred embodiment

For sake of clarity, but without any limiting sense, the following description will refer to a TD-SCDMA (TD-Synchronous CDMA) system.

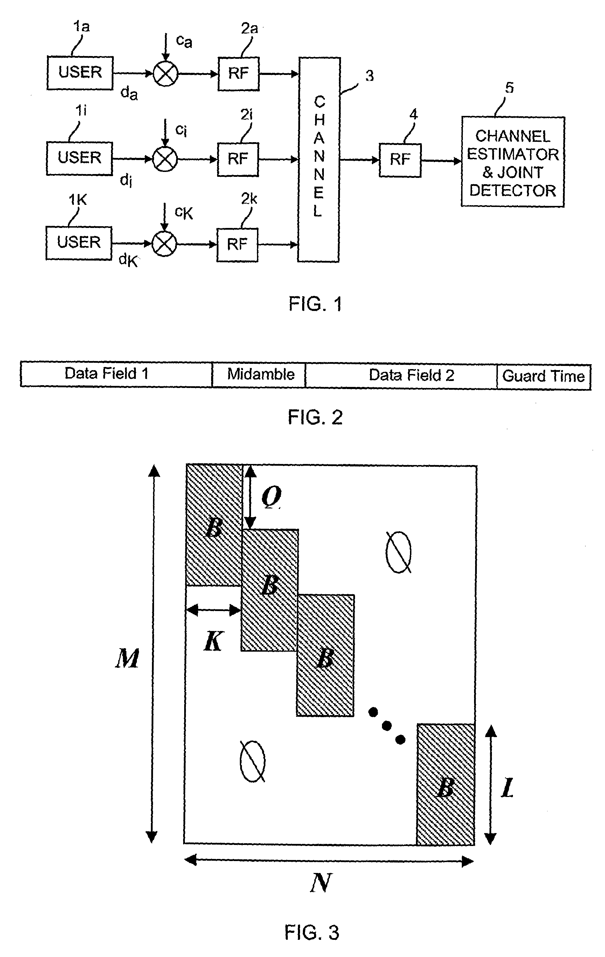

Fig. 1 schematically shows a group of co-channel users 1a...1i...1K of a TD-SCDMA system, which share a same time slot and a same frequency in the uplink transmission direction. The users generate respective symbol sequences $d_a...d_K$. The symbols in each sequence $d_a...d_K$ are individually spread by a respective code $c_a...c_K$ comprising a predetermined number C of complex elements (chips). For simplicity, it is assumed that each user is assigned a single code, even if, as known, a user can be assigned several codes if his/her communication requires so. The spread sequences are modulated to radio-frequency in modulating and transmitting blocks 2a...2K and sent over the wireless transmission channel 3 to the base station, schematised here by receiving and demodulating unit 4 and by channel estimation and joint detection unit 5.

As known, and as shown in Fig. 2, the spread sequence of each user is transmitted as a burst comprising two data fields (or half bursts), each comprising D symbols, separated by the midamble, which contains the training codes used for channel estimation. A guard time separates consecutive bursts.

Receiver 4 receives a combined sequence resulting from the superposition of the bursts from users 1a...1K, affected by interference and noise, and converts such sequence to base-band signals. Since receiver 4 generally includes a plurality of receiving antennas, the sequence will comprise as many replicas of each burst as the antennas are. After sampling at the proper rate in a sampling unit (not shown), block 5 determines the matrix of the channel response for the different bursts by using the midambles and performs the joint detection for the left and right half bursts according to a FFT-based sliding window method. The invention affords improvements in said method.

The basic principles of the FFT-based sliding window method will be shortly recalled with reference to Figs. 3 to 8.

Fig. 3 is a graphical representations of channel response matrix $\boldsymbol{A}$. Considering half a burst and denoting by W is the length of the channel impulse response and by Z the number of antennas in receiver 4, in case of maximum resource usage in the time slot, A is a matrix with M rows and N columns, where M = (D*C+W-1)*Z and N = D*K, and comprises D blocks with L rows and K columns, where L = (C+W-1)*Z, arranged along the matrix diagonal and vertically shifted by Q = C*Z rows relative to the previous block. Vector $\boldsymbol{e}$ is a column vector with size M, whose elements are the chips of the different spread symbols of the different users received at the different antennas in that burst. Vector $\boldsymbol{d}$ is a column vector with size N, whose elements are the symbols transmitted by the users in that half burst.

In the exemplary application to a TD-SCDMA system with K = 16 and Z = 8, assuming a spreading factor C = 16 for all codes and taking into account that W = 16, it can be immediately seen that M = 2936, N = 352, L = 248 and Q = 128.

The sliding window method decomposes the minimum square problem of equation (2) into a plurality of problems $\|\boldsymbol{A_s} \cdot \boldsymbol{d_s} - \boldsymbol{e_s}\|$ or, written in another form,

$$A_s \cdot d_s = e_s \tag{4}$$

where $\boldsymbol{A_s}$, are submatrices of size $M_s$ taken from matrix $\boldsymbol{A}$, and $\boldsymbol{d_s}$, $\boldsymbol{e_s}$ are subvectors of length $M_s$, $N_s$ respectively, taken from vectors $\boldsymbol{d}$ and $\boldsymbol{e}$, respectively.

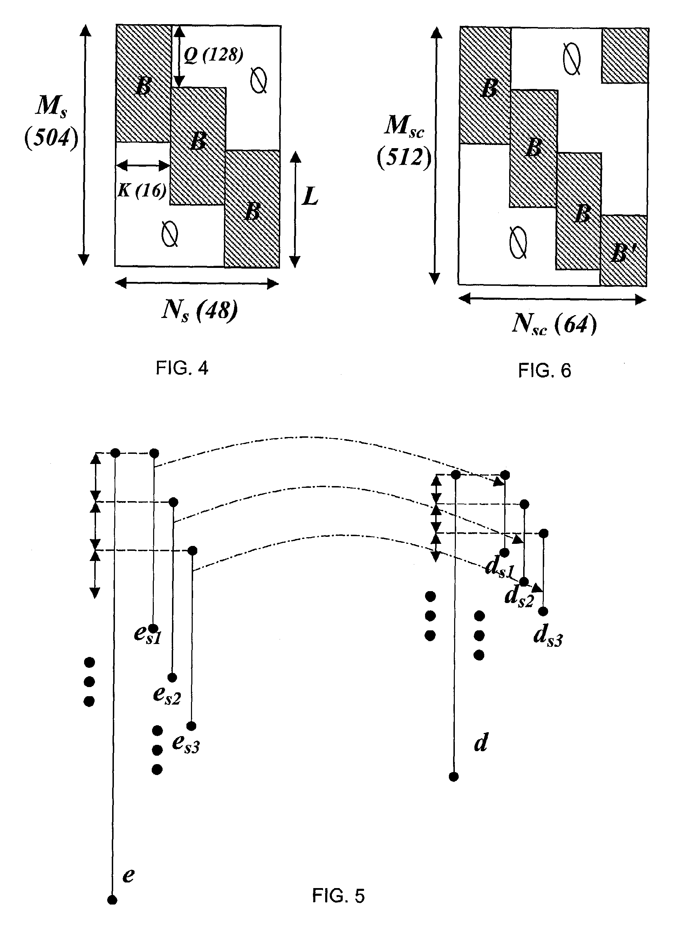

For instance, as shown in Fig. 4, each submatrix $\boldsymbol{A_s}$ may include three consecutive blocks B, so that, in case of maximum resource usage inside the time slot of the TD-SCDMA system, its size will be $M_s = 504$, $N_s = 48$; parameters L, K, Q remain unchanged. With such sizes, a group $\boldsymbol{\{e_s\}}$ and a group $\boldsymbol{\{d_s\}}$ of 40 subvectors, 20 for each half burst, can be used in order to have a correct detection.

The relation between subvectors $\boldsymbol{e_s}$ and $\boldsymbol{d_s}$ is shown in Fig. 5. The bi-directional arrows on the left of complete vectors $\boldsymbol{e}$ and $\boldsymbol{d}$ indicate vector portions corresponding to a symbol. Every solution $\boldsymbol{d_{sj}}$ ($1 \leq j \leq 20$) of the small equation system gives a part of the complete solution, obtained by considering the 16 central elements of small solution vectors $\boldsymbol{d_{sj}}$. Only for the first and the twentieth subvectors, which are the initial and final parts, respectively, of solution $\boldsymbol{d}$ of equation (2), the first and the last 32 elements are to be considered.

The bigger the size of $\boldsymbol{A_s}$, the better the approximation of the solution. Anyway it has been evaluated that the above size guarantees a sufficient precision in the result.

In order to apply the FFT technique, each matrix $\boldsymbol{A_s}$ is converted into a block-circulant submatrix $\boldsymbol{A_{sc}}$, shown in Fig. 6, by the addition of a block column B' having the same size as blocks B. The elements of B' are located in the initial and final rows of submatrix $\boldsymbol{A_{sc}}$ in such a manner that the latter has a size 4(C*Z)*4K, thus 512x64 in the considered example.

By such a transformation, equations (4) become:

$$A_{sc} \cdot d_{sc} = e_{sc} \tag{5}$$

where subvectors $e_{sc}$ are obtained from subvectors $e_s$ by adding 8 final zeroes.

By applying the FFT (in particular a four point block FFT), equations (5) become, in the frequency domain

$$\Lambda_{sc} \cdot d_{sc}{}^f = e_{sc}{}^f \tag{6}$$

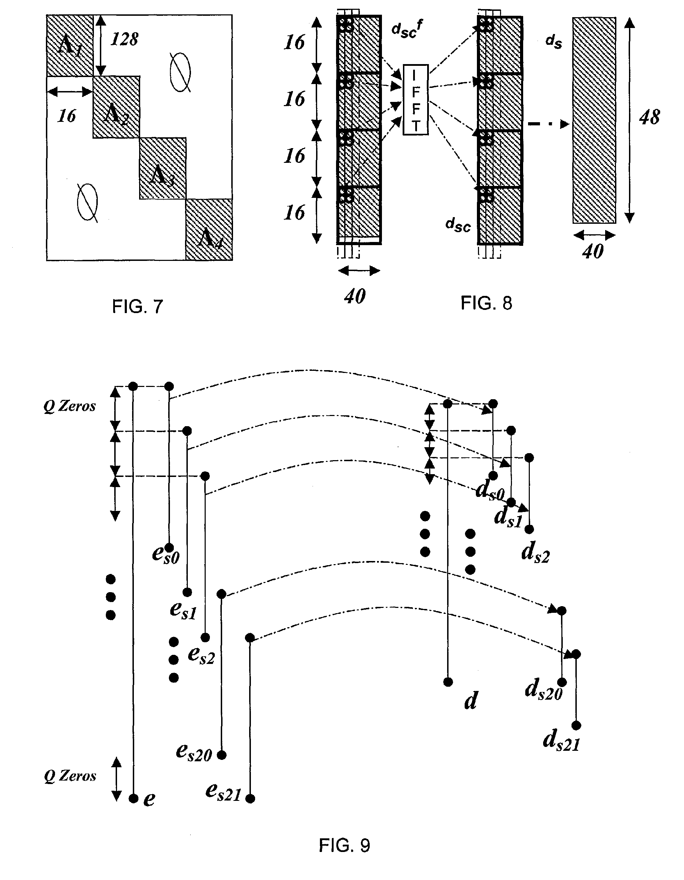

In the considered example, matrix $\Lambda_{sc}$ is a block diagonal matrix comprising four 128x16 blocks $\Lambda_p.(1 \le p \le 4)$, as shown in Fig. 7. The solution of problem (6) entails the solution of four less dimension minimum square error problems:

$$\Lambda_p \cdot d_{scp}{}^f = e_{scp}{}^f \tag{7}$$

where $d_{scp}{}^f$ and $e_{scp}{}^f$ are subvectors belonging to groups $\{d_{sc}{}^f\}$ and $\{e_{sc}{}^f\}$ corresponding to groups $\{d_{sc}\}$ and $\{e_{sc}\}$. The four minimum square error problems are well independent and they can be solved in parallel with one of the "Zero Forcing Linear Equaliser" methods mentioned above.

Application of the Inverse FFT (IFFT) to subvectors $d_{sc}{}^f$ gives subvectors $d_{sc}$ in the time domain, from which subvectors $d_s$ will be recovered. When passing from subvectors $d_{sc}$ to subvectors $d_s$ the last 16 elements are to be discarded, as it can be immediately appreciated by considering the sizes of the involved elements. The conversion of subvectors $d_{sc}{}^f$ into subvectors $d_s$ is shown in Fig. 8. The Figure refers to the whole group of 40 subvectors, the trace of some of which is shown in phantom lines in blocks $d_{sc}{}^f$ and $d_{sc}$.

As said in the introduction of the specification, due to the perturbation introduced in order to make submatrices $A_s$ circulant (see Fig. 6), the FFT/IFFT sliding window method gives a noisy solution for the first and the last chips (in the example the first and the last 16 chips) of complete detected vector $d$, which chips come from subvectors $d_{s1}$ and $d_{s20}$. Indeed, said chips have no replica in the adjacent subvectors and then cannot be discarded, contrary to what is made for all other subvectors.

The invention consists in adding a number of null elements at the beginning and the end of received signal vector $e$. In particular, in the considered example, 128 zeros are added at the beginning and the end of received signal vector $e$. The addition of zeros gives rise to two further subvectors in the decomposition, namely a subvector $e_{s0}$ before the first vector $e_{s1}$ (Fig. 5) of the conventional decomposition and a subvector $e_{s21}$ after the last subvector $e_{s20}$ of the conventional decomposition. The initial portion of $e_{s0}$ and the final portion of $e_{s21}$ include zero elements.

The relation between received subvectors $\{e_s\}$ and transmitted subvectors $\{d_s\}$ when applying the invention is shown in Fig. 8, always referring to the case of the TD-SCDMA standard. The first 128 chips of $e_{s0}$ and the last 128 chips of $e_{s21}$ are the zeros introduced. Thanks to this "zero introduction", the 16 elements forming the central part of the partial solution related to subvectors $d_{s0}$ and $d_{s21}$ contain a "clear" version of the chips that are corrupted when using the conventional FFT-based sliding window method. Indeed, as said before, in correspondence of $d_{s0}$ and $d_{s21}$, the first and the last 32 elements, respectively, are to be considered. Thanks to the present invention, the first 16 elements in $d_{s0}$ and the last 16 elements in $d_{s21}$ do not correspond to any symbol transmitted and can be discarded. The first and the last symbol actually transmitted are located in the central portion of both sybvectors and therefore are not perturbed.

In a general TDD standard the corrupted chips are the first U and the last U elements respectively of the first and last sliding window subvector solution, where U is the number of columns of the block added to sliding window matrix $A_s$. Consequently, Q = C*Z zeros are to be added at each end of vector $e$.

This invention introduces a very little additional computation cost in the FFT/IFFT algorithm because it involves only managing two subvectors more compared to the classical solution and it does not involve any modification in the matrix size and in the FFT/IFFT method.

Fig. 9 resumes the whole joint detection procedure using the invention.

At step 101, receiver 4, 5 (Fig. 1) receives at each time slot and at each antenna the spread user symbols affected by interference and noise, the received signal forming vector $e$. At steps 102, 103, the channel impulse response is estimated for each user 1 and each antenna and impulse response matrix $A$ is created based on the estimated channels and the spreading codes $c_i$. Matrix $A$ is then decomposed into small submatrices $A_s$ which are converted into circulant submatrices $A_{sc}$ by the addition of a block (steps 104, 105).

In subsequent step 106, Q initial and final zeros are added to vector $e$.

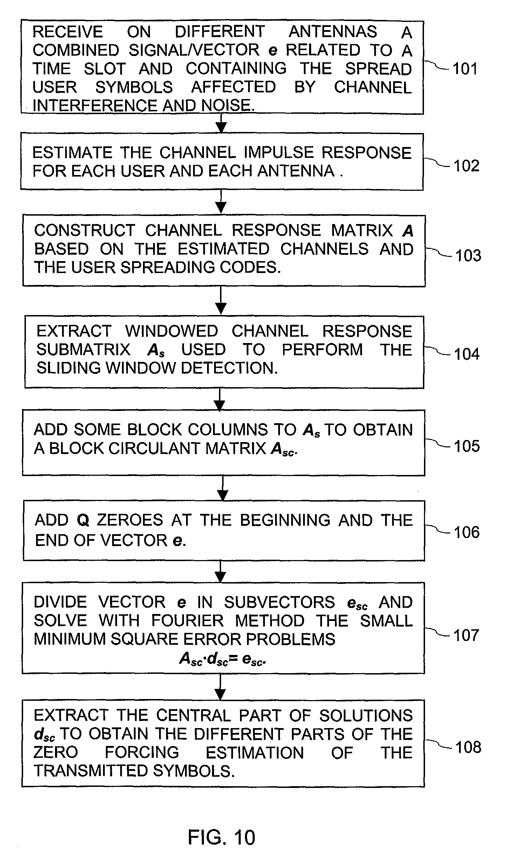

At this point, at step 107 vector $e$ is subdivided into subvectors $e_{sc}$ and the FFT/IFFT is applied to solve equations (5). Once obtained again subvectors $d_s$, the central part thereof is extracted to obtain the zero forcing estimation of the transmitted symbols of each user. Contrary to the conventional solution, there is no need to extract also the first and the last 16 elements for the first and last subvectors $d_{s0}$ and $d_{s21}$, respectively (Fig. 10).

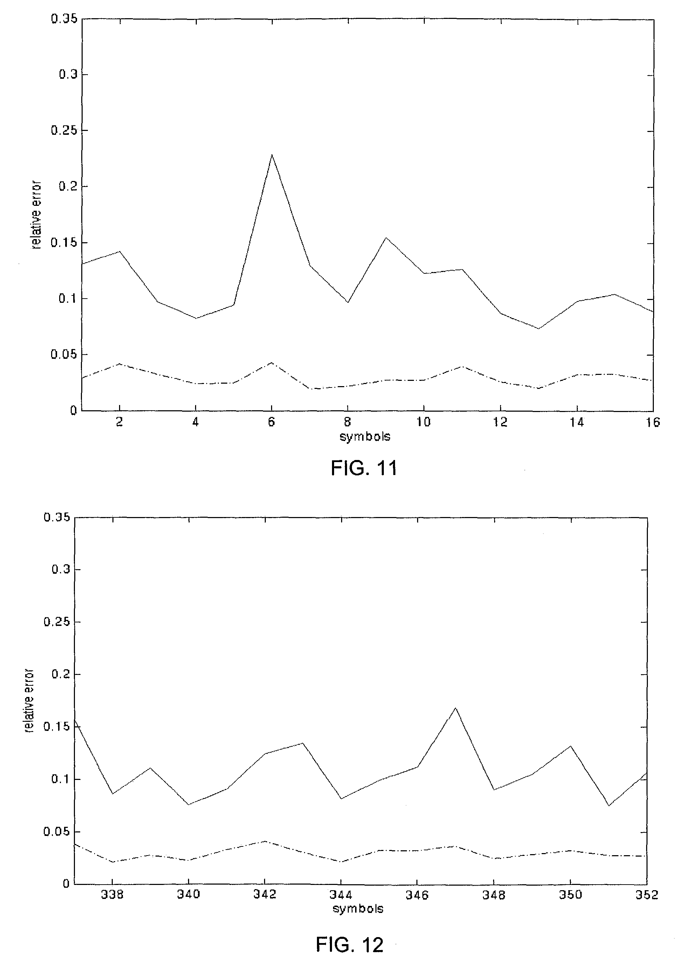

Figs. 11 and 12 show the average relative error for the first and the last 16 symbols of the solution for the TD-SCDMA standard, with (dashed line) or without (continuous line) application of the invention. The relative error is calculated in comparison with the theoretical solution of the problem (equation (1)). In both cases the positive effect of the invention is evident.

It is clear that the above description has been given by way of non-limiting example and that variants and modifications are possible without departing from the scope of the invention. In particular, even if the invention has been disclosed in detail with reference to a TD-SCDMA system with 16 codes and 8 antennas, clearly it can be applied to any other TD-SCDMA system configuration and to any TD-CDMA system. The only changes necessary concern the sizes of the matrices/submatrices and vectors/subvectors as well as the number of null elements to be added. Moreover, since the sliding window FFT method is applicable also to FD-CDMA systems, the skilled in the art has no problem in adapting the invention also to such systems.

### Claims

1. A method of joint user detection in code division multiple access (CDMA) wireless communication systems, comprising the steps of:

   - receiving (101), at each time slot and on at least one antenna, a combined signal containing a predetermined number of symbols of co-channel users, spread by respective spreading codes, and forming a received signal vector $e$;
   - estimating (102) the channel impulse responses for each user and the at least one antenna;
   - building (103) a channel response matrix $A$ based on the estimated impulse responses and the spreading codes;
   - detecting (104, 105, 107) the transmitted symbol vector $d$ from channel response matrix $A$ and received signal vector $e$ by a sliding window method employing Fourier transform, said detection providing a plurality of partly overlapping transmitted signal subvectors $d_s$;

   **characterised in that**, before windowing, a predetermined number of null elements is added at the beginning and at the end of received signal vector $e$ (106), whereby, upon the detection, the first and the last information symbols are located in a central portion of a respective first and last transmitted signal subvector $d_s$, and the portions of said first and last transmitted signal subvectors $d_s$ corresponding to said null elements are discarded (108).

2. A method as claimed in claim 1, **characterised in that** said estimation of the transmitted signal is a zero forcing estimation directly applied onto the channel response matrix $A$.

3. A method as claimed in claim 1 or 2, **characterised in that** said system is a TD-CDMA system, and the number of null elements added is given by the spreading factor multiplied by the number of antennas.

4. A joint detector (5) in a base station of a wireless CDMA communication system, **characterised in that** it performs a detection based on a sliding window Fourier transform method according to any preceding claim.

5. A CDMA communication system including, at each base station, a joint detector (5) according to claim 4.

FIG. 1

FIG. 2

FIG. 3

$M_s$
(504)

$Q$ (128)

$B$

$B$

$K$ (16)

$L$

$B$

$N_s$ (48)

FIG. 4

$M_{sc}$
(512)

$B$

$B$

$B$

$B'$

$N_{sc}$ (64)

FIG. 6

$e_{s1}$

$e_{s2}$

$e_{s3}$

$e$

$d_{s1}$

$d_{s2}$

$d_{s3}$

$d$

FIG. 5

FIG. 7

FIG. 8

FIG. 9

| | |
|---|---|
| RECEIVE ON DIFFERENT ANTENNAS A COMBINED SIGNAL/VECTOR $e$ RELATED TO A TIME SLOT AND CONTAINING THE SPREAD USER SYMBOLS AFFECTED BY CHANNEL INTERFERENCE AND NOISE. | 101 |
| ESTIMATE THE CHANNEL IMPULSE RESPONSE FOR EACH USER AND EACH ANTENNA . | 102 |
| CONSTRUCT CHANNEL RESPONSE MATRIX $A$ BASED ON THE ESTIMATED CHANNELS AND THE USER SPREADING CODES. | 103 |
| EXTRACT WINDOWED CHANNEL RESPONSE SUBMATRIX $A_s$ USED TO PERFORM THE SLIDING WINDOW DETECTION. | 104 |
| ADD SOME BLOCK COLUMNS TO $A_s$ TO OBTAIN A BLOCK CIRCULANT MATRIX $A_{sc}$. | 105 |
| ADD $Q$ ZEROES AT THE BEGINNING AND THE END OF VECTOR $e$. | 106 |
| DIVIDE VECTOR $e$ IN SUBVECTORS $e_{sc}$ AND SOLVE WITH FOURIER METHOD THE SMALL MINIMUM SQUARE ERROR PROBLEMS $A_{sc} \cdot d_{sc} = e_{sc}$. | 107 |
| EXTRACT THE CENTRAL PART OF SOLUTIONS $d_{sc}$ TO OBTAIN THE DIFFERENT PARTS OF THE ZERO FORCING ESTIMATION OF THE TRANSMITTED SYMBOLS. | 108 |

FIG. 10

FIG. 11

FIG. 12

**European Patent Office**

# EUROPEAN SEARCH REPORT

Application Number

EP 04 42 5097

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,X | VOLLMER M ET AL: "COMPARATIVE STUDY OF JOINT-DETECTION TECHNIQUES FOR TD-CDMA BASED MOBILE RADIO SYSTEMS" IEEE JOURNAL ON SELECTED AREAS IN COMMUNICATIONS, IEEE INC. NEW YORK, US, vol. 19, no. 8, August 2001 (2001-08), pages 1461-1475, XP001115203 ISSN: 0733-8716 | 1-5 | H04B1/707 |
| Y | * page 1466, left-hand column - page 1467, left-hand column * | 1-5 | |
| Y | PRESS W H, TEUKOLSKY S A, VETTERLING W T, FLANNERY B P: "Numerical Recipes in C: The Art of Scientific Computing 2nd Edition pages 538-545" 1992 , CAMBRIDGE UNIVERSITY PRESS , CAMBRIDGE XP002287282 * page 540 - page 542, line 2 * * page 543 - page 544 * | 1-5 | |
| D,A | KLEIN A ET AL: "ZERO FORCING AND MINIMUM MEAN-SQUARE-ERROR EQUALIZATION FOR MULTIUSER DETECTION IN CODE-DIVISION MULTIPLE-ACCESS CHANNELS" IEEE TRANSACTIONS ON VEHICULAR TECHNOLOGY, IEEE INC. NEW YORK, US, vol. 45, no. 2, 1 May 1996 (1996-05-01), pages 276-287, XP000598095 ISSN: 0018-9545 * the whole document * | 1-5 | **TECHNICAL FIELDS SEARCHED** (Int.Cl.7)<br><br>H04B |

-/--

The present search report has been drawn up for all claims

| Place of search | Date of completion of the search | Examiner |
|---|---|---|
| MUNICH | 6 July 2004 | Ricciardi, M |

EPO FORM 1503 03.82 (P04C01)

European Patent
Office

**EUROPEAN SEARCH REPORT**

Application Number

EP 04 42 5097

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | MACHAUER R ET AL: "FFT-speed and windowed multiuser detector for UTRA-FDD high rate data mode" IEEE 7TH INT. SYMP. ON SPREAD-SPECTRUM TECHN. & APPL., vol. 3, 2 September 2002 (2002-09-02), pages 712-716, XP010615628 Prague, Czech Republic * the whole document * --- | 1-5 | |
| D,A | MACHAUER R ET AL: "FFT speed multiuser detection for high rate data mode in UTRA-FDD" VTC FALL 2001. IEEE 54TH. VEHICULAR TECHNOLOGY CONFERENCE. PROCEEDINGS. ATLANTIC CITY, NJ, OCT. 7 - 11, 2001, IEEE VEHICULAR TECHNOLGY CONFERENCE, NEW YORK, NY: IEEE, US, vol. 1 OF 4. CONF. 54, 7 October 2001 (2001-10-07), pages 502-505, XP010562737 ISBN: 0-7803-7005-8 * the whole document * --- | 1-5 | TECHNICAL FIELDS SEARCHED (Int.Cl.7) |
| A | WO 99/40698 A (MOTOROLA INC) 12 August 1999 (1999-08-12) * the whole document * ----- | 1-5 | |

The present search report has been drawn up for all claims

| Place of search | Date of completion of the search | Examiner |
|---|---|---|
| MUNICH | 6 July 2004 | Ricciardi, M |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.............................................................................................
& : member of the same patent family, corresponding
   document

EPO FORM 1503 03.82 (P04C01)

**ANNEX TO THE EUROPEAN SEARCH REPORT**
**ON EUROPEAN PATENT APPLICATION NO.**                    EP 04 42 5097

This annex lists the patent family members relating to the patent documents cited in  the above-mentioned European search report.
The members are as contained in the European Patent Office EDP file on
The European Patent Office is in no way liable for these particulars which are merely  given for the purpose of information.

06-07-2004

| Patent document cited in search report | Publication date | Patent family member(s) | | Publication date |
|---|---|---|---|---|
| WO 9940698  A | 12-08-1999 | US | 6339612 B1 | 15-01-2002 |
| | | BR | 9814805 A | 17-10-2000 |
| | | EP | 1068688 A1 | 17-01-2001 |
| | | JP | 2002503057 T | 29-01-2002 |
| | | WO | 9940698 A1 | 12-08-1999 |

For more details about this annex : see Official Journal of the European Patent Office, No. 12/82